# FASCICULE DE BREVET EUROPEEN

(11) **EP 1 077 147 B1**
(45) Date de publication et mention de la délivrance du brevet: **29.03.2006**
(21) Numéro de dépôt: 00402068.1
(22) Date de dépôt: 20.07.2000
(51) Int. Cl.: B60J 5/04, E05D 15/30

(54) **Agencement d'une porte coulissante sur un véhicule.**
Schiebetüranordnung an einem Fahrzeug
Sliding door assembly on a vehicle

(30) Priorité: 19.08.1999 FR 9910637
(43) Date de publication de la demande: 21.02.2001
(73) Titulaire: Peugeot Citroen Automobiles, 92200 Neuilly Sur Seine (FR)
(72) Inventeur: Bourlier, Arnaud, 75015 Paris (FR)
(74) Mandataire: De Cuenca, Emmanuel Jaime

(56) Documents cités:
- DE-A- 3 705 768
- DE-A- 4 403 126

## Description

L'invention se rapporte à un agencement d'une porte coulissante sur un véhicule selon le préambule de la revendication 1. Un tel agencement est décrit dans DE-A-4403126.

Les agencements connus de portes coulissantes de véhicules comportent, classiquement, des moyens de guidage de la porte constitués, par exemple, d'un chariot et d'un rail, ainsi que des moyens d'articulation de la porte par rapport à la structure du véhicule.

Cependant, les mécanismes connus sont complexes et/ou engendrent, lors de l'ouverture de la porte, un débattement relativement important de cette dernière dans une direction perpendiculaire à la direction de son coulissement.

Un but de la présente invention est de proposer un agencement d'une porte coulissante sur un véhicule, palliant tout ou parité des inconvénients de l'art antérieur relevés ci-dessus.

Ce but est atteint par le fait que dans l'agencement d'une porte coulissante sur un véhicule selon l'invention, la porte est reliée au véhicule par un ensemble de guidage constitué d'un chariot et d'un rail de guidage du chariot, ainsi que par des moyens d'articulation, les moyens d'articulation comportant un premier et un second bras articulés chacun d'une part sur le véhicule et d'autre part sur un troisième bras de liaison, le bras de liaison étant articulé sur la porte, les moyens d'articutation étant agencés de façon à limiter le débattement de la porte dans une direction perpendiculaire à l'axe de son -coulissement lors des mouvements d'ouverture et de fermeture.

L'invention peut comporter l'une ou plusieurs des caractéristiques suivantes :
- les axes d'articulation sur le véhicule des premier et second bras sont distincts,
- les axes d'articulation des premier et second bras sur le bras de liaison sont distincts et situés sensiblement au niveau d'une extrémité libre du bras de liaison,
- les premier et second bras ont chacun la forme générale d'une plaque pliée sensiblement en L, les plaques étant orientées sensiblement verticalement, les axes d'articulation des bras étant formés au niveau de bords verticaux desdites plaques,
- le bras de liaison est constitué d'une plaque orientée de manière sensiblement verticale et dont les bords verticaux comportent les axes d'articulation du bras de liaison,
- l'axe d'articulation du premier bras sur le bras de liaison est situé entre d'une part l'axe d'articulation du second bras sur le bras de liaison et, d'autre part, l'axe d'articulation du bras de liaison sur la porte,
- l'agencement comporte des moyens de compensation, disposés au niveau du second bras et/ou du bras de liaison, et autorisant un faible débattement du second bras (5) par rapport au bras de liaison,
- les moyens de compensation sont constitués d'une glissière solidaire du bras de liaison, l'axe d'articulation du second bras sur le bras de liaison étant mobile dans une fente formée dans la glissière,
- le second bras est constitué d'un vérin formant les moyens de compensation,
- les mouvements d'ouverture et de fermeture de la porte sont réalisés par un actionneur entraînant en rotation le premier et/ou le second bras autour de leur axes d'articulation respectifs sur le véhicule,
- le rail de guidage est situé dans la partie basse de l'ouverture de porte du véhicule, le chariot étant situé dans la partie inférieure et avant de la porte, les moyens de d'articulation étant situés au niveau la partie arrière de la porte et du côté correspondant de l'ouverture de porte.

D'autres particularités et avantages apparaîtront à la lecture de la description ci-après faite en référence aux figures dans lesquelles :
- la figure 1 représente une vue de dessus, schématique et partielle, de trois étapes de l'ouverture d'une porte coulissante de véhicule conforme à l'invention,
- la figure 2 représente une vue en perspective et schématique d'un agencement de porte coulissante selon l'invention,
- la figure 3 représente une vue sensiblement de trois quarts arrière de la porte de la figure 2,
- la figure 4 représente un détail de l'agencement de la figure 2, illustrant les moyens d'articulation de la porte,
- la figure 5 représente une seconde forme de réalisation des moyens d'articulation de la porte.

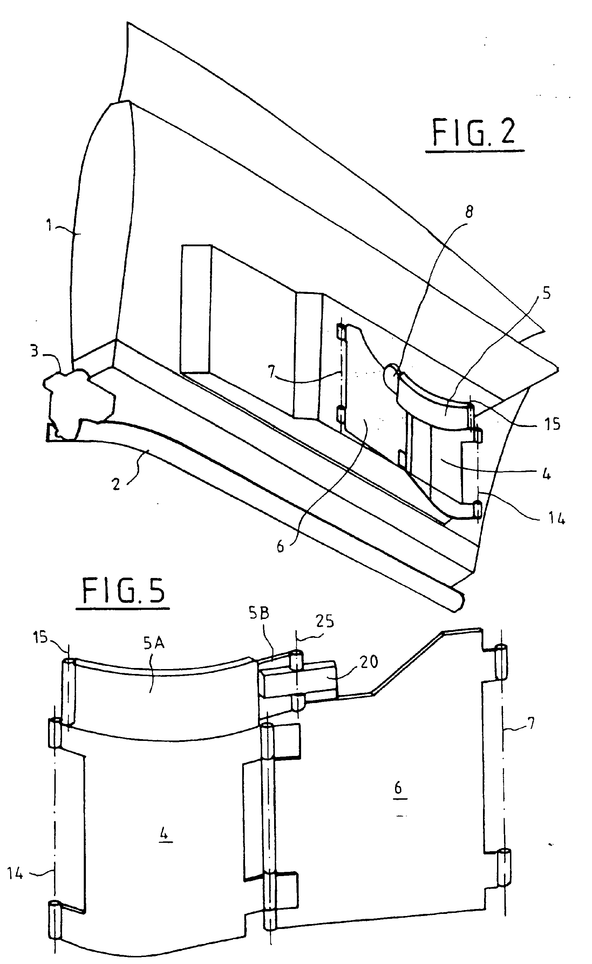

La figure 2 illustre un exemple de réalisation de l'agencement d'une porte coulissante 1 conforme à l'invention. L'agencement comporte un rail de guidage 2 disposé dans la partie inférieure de la caisse du véhicule (non représentée), et un chariot 3 fixé sur la porte 1. Le chariot 3, qui est conformé pour coulisser dans le rail 2, est fixé, par exemple, dans la partie inférieure et avant de la porte 1. Classiquement, la partie avant du rail 2 est cintrée vers l'intérieur du véhicule, pour permettre le déboîtement de la porte vers l'extérieure ou l'intérieur, lors respectivement des phases d'ouverture et de fermeture.

L'agencement comporte également des moyens d'articulation de la porte 1 par rapport à la structure du véhicule. Les moyens de d'articulation sont situés au niveau la partie arrière de la porte 1, et au niveau du côté correspondant - de l'ouverture de porte délimitée par la caisse.

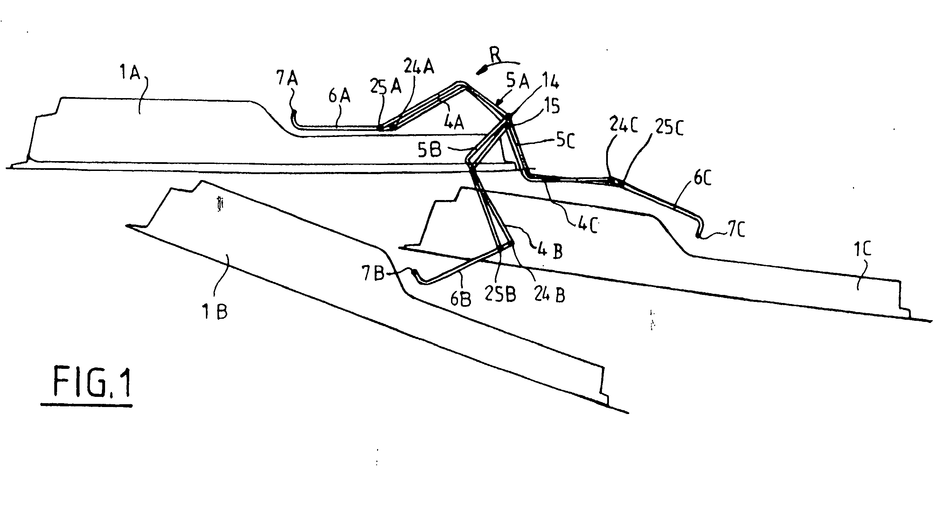

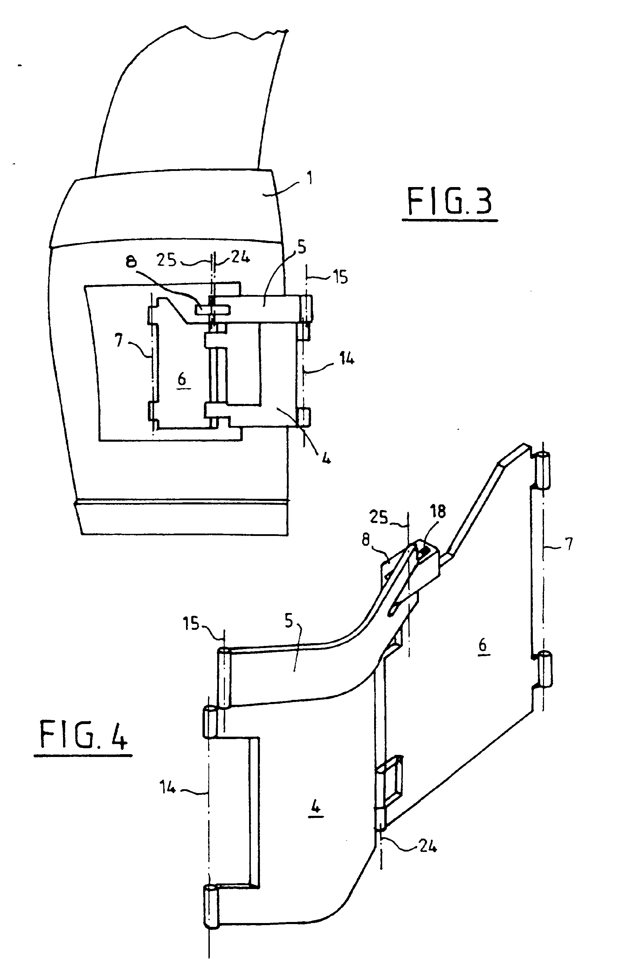

Selon l'invention, les moyens d'articulation comportent un premier 4 et un second bras 5 articulés chacun, d'une part sur le véhicule, et d'autre part sur une première extrémité d'un troisième bras 6 de liaison (figure 1 et 4). La seconde extrémité du bras de liaison 6 est articulée quant à elle sur la porte 1. Le bras de liaison 6 est articulé de préférence sur la partie médiane de la porte 1.

Les axes d'articulation 14, 15 des premier 4 et second bras 5 sur le véhicule sont sensiblement parallèles au plan de la porte 1. De préférences ces axes d'articulation 14, 15 sont verticaux et faiblement espacés l'un de l'autre. Par ailleurs, les axes d'articulation 24, 25 des premier 4 et second bras 5 sur le bras de liaison 6 sont verticaux, distincts, et situés au niveau d'une première extrémité du bras de liaison 6.

Les trois bras 4, 5, 6 sont agencés de façon que l'axe d'articulation 24 du premier bras 4 sur le bras de liaison 6 soit situé entre d'une part l'axe d'articulation 25 du second bras 5 sur le bras 6 de liaison et, d'autre part, l'axe d'articulation 7 du bras de liaison 6 sur la porte 1.

Les premier 4 et second bras 5 peuvent avoir chacun la forme générale d'une plaque pliée sensiblement en L. Les plaques formant les premier 4 et second bras 5 sont disposées sensiblement verticalement. Les axes d'articulation 14, 15, 24, 25 des bras 4, 5 sont formés au niveau des bords verticaux desdites plaques. De préférence, les plaques formant les premier 4 et second bras 5 sont agencées de façon que leur partie convexe (angle du L) soit orientée vers l'intérieur du véhicule lorsque la porte 1 est en position fermée (figures 1 et 4). Comme illustré à la figure 4, le premier bras 4 peut avoir la forme générale d'une plaque carrée. Le second bras 5 peut avoir quant à lui une hauteur inférieure à celle du premier bras 4, de façon à former une plaque sensiblement parallélépipédique. Le second bras 5 peut s'étendre la long du bord supérieur du premier bras 4.

De préférence, l'axe d'articulation 25 du second bras 5 sur le bras de liaison 6 est disposé dans une glissière 8 de compensation permettant un faible débattement de l'axe d'articulation 25 par rapport au bras de liaison 6.

La glissière de compensation 8 est constituée, par exemple, d'une pièce parallélépipédique rendue solidaire du bras de liaison 6. La glissière 8 est pourvue d'une rainure 18 sensiblement parallèle au plan du bras de liaison 6 et destinée à accueillir l'axe d'articulation 25 du second bras 5 sur le bras de liaison 6.

Le bras de liaison 6 peut être constitué également d'une d'une plaque disposée verticalement et dont les bords verticaux comportent les axes d'articulation 24, 7 du bras de liaison 6. Les bras 4, 5, 6 peuvent être constitués, par exemple, de métal ou dé tout autre matériau approprié.

Les mouvements d'ouverture et de fermeture de la porte 1 peuvent être réalisés par un actionneur électrique, pneumatique ou hydraulique. L'actionneur (non représenté) peut entraîner en rotation le premier 4 et/ou le second 5 bras autour de leur axes d'articulation 14, 15 respectifs sur le véhicule.

Trois positions de la porte 1 ont été représentées à la figure 1. Les références des éléments mobiles du mécanisme désignés ci-dessus ont été complétées par les lettres A, B ou C pour désigner respectivement les trois positions de la porte.

Dans une première position dans laquelle la porte est fermée, le bras de liaison 6A est sensiblement parallèle au plan de la porte. Par ailleurs, les différents axes d'articulation 7, 24A, 25A, 14, 15 des bras 4, 5, 6 sont sensiblement alignés le long de la porte 1A.

Pour effectuer l'ouverture de la porte, l'actionneur entraîne en rotation le premier 4 et/ou le second bras 5 autour de leurs axes d'articulation 14, 15 sur le véhicule. Les premier 4 et second bras 5 pivotent dans le sens de rotation R de la figure 1. La cinématique de la porte 1 B est réalisé par la l'agencement des bras 4, 5, 6 et par le guidage de la porte par l'ensemble constitué par le rail 2 et le chariot 3 (figure 2).

Lors de son ouverture, la porte commence par sortir du cadre du véhicule par sa partie arrière. Dans une seconde position intermédiaire représentée, la porte 1 B est sortie de l'ouverture de porte délimitée par la caisse du véhicule. Dans cette position intermédiaire, la partie arrière de la porte 1 B est plus éloignée du plan du cadre de porte que la partie avant de la porte 1A. Par, ailleurs, les premier 4B et second 5B bras ont pivoté d'environ 90 degrés par rapport à la position qu'ils occupent lorsque la porte est fermée. De plus, dans cette seconde position intermédiaire, le bras de liaison 6B est sensiblement perpendiculaire à aux premier 4B et second bras 5B.

Enfin, la figure 1 représente la porte 1C dans une troisième position dans laquelle cette dernière est ouverte. Dans sa position ouverte, la porte 1C est située à l'arrière de l'ouverture de porte. Plus précisément, le bord avant de la porte 1C est situé à proximité de la partie arrière de l'ouverture de porte (non représentée). Dans -cette position ouverte, les premier 4C et second 5C bras ont pivoté d'environ 140 degrés par rapport à la position qu'ils occupent lorsque la porte est fermée. Par ailleurs, le bras de liaison 6C est situé quant à lui sensiblement dans le prolongement des premier 4C et second 5C bras.

Le mouvement de fermeture de la porte ne sera quant à lui pas décrit en détail. En effet, pour refermer la porte, l'actionneur fait pivoter les bras 4, 5 dans le sens contraire de celui R de l'ouverture, la porte 1 décrivant alors les mouvements inverses à ceux de l'ouverture.

On conçoit donc aisément que l'invention s'applique avantageusement à une porte latérale de véhicule. L'agencement des moyens d'articulation 4, 5, 6 et de guidage de la porte 1 permettent de limiter le débattement de cette dernière dans une direction perpendiculaire à la direction de son coulissement lors des mouvements d'ouverture et de fermeture.

En particulier, la forme coudée des premier 4 et second bras 5 permet une ouverture importante de la porte 1 tout en limitant son débattement vers l'extérieur. En effet, la partie coudée des bras 4, 5 peut venir épouser le bord de l'encadrement de porte lorsque la porte est ouverte. C'est-à-dire que l'une des deux portions des bras en forme de L traverse le plan du cadre de porte, sensiblement perpendiculairement. La seconde portion du L formée par les bras 4, 5 s'étend quant à elle le long de la carrosserie, vers l'arrière du cadre de porte.

Bien entendu, l'invention n'est pas limitée à l'exemple de réalisation décrit ci-dessus. Par exemple, la figure 5 représente une variante de réalisation des moyens de compensation entre le bras de liaison 6 et le second bras 5

Dans la forme de réalisation de la figure 5, le second bras est constitué de deux pièces 5A, 5B coulissantes dont une première 5A est articulée sur la structure (axe 15) et la seconde 5B est articulée sur le bras de liaison 6 (axe 25). Plus précisément, l'axe d'articulation 25 de la seconde pièce 5B sur le bras de liaison 6 est logé dans un support 20 solidaire du bras de liaison 6. Les deux pièces coulissantes 5A, 5B constituent un vérin, par exemple électrique, permettant un faible débattement de la distance entre les deux axes d'articulation 15, 25 du second bras.

## Revendications

1. Agencement d'une porte coulissante sur un véhicule, la porte (1) étant reliée au véhicule par un ensemble de guidage constitué d'un chariot (3) et d'un rail (2) de guidage du chariot (3), ainsi que par des moyens d'articulation, **caractérisé en ce que** les moyens d'articulation comportent un premier (4) et un second bras (5) articulés chacun d'une part sur le véhicule et d'autre part sur un troisième bras (6) de liaison, le bras de liaison (6) étant articulé sur la porte (1), les moyens d'articulation (4, 5, 6) étant agencés de façon à limiter le débattement de la porte (1) dans une direction perpendiculaire à l'axe de son coulissement lors des mouvements d'ouverture et de fermeture.

2. Agencement d'une porte coulissante selon la revendication 1 **caractérisé en ce que** les axes d'articulation (14, 15) sur lé véhicule des premier (4) et second bras (5) sont distincts.

3. Agencement d'une porte coulissante selon la revendication 1 ou 2 **caractérisé en ce que** les axes d'articulation (24, 25) des premier (4) et second bras (5) sur le bras de liaison (6) sont distincts et situés sensiblement au niveau d'une extrémité libre du bras de liaison (6).

4. Agencement d'une porte coulissante selon l'une quelconque des revendications 1 à 3 **caractérisé en ce que** les premier (4) et second bras (5) ont chacun la forme générale d'une plaque pliée sensiblement en L, les plaques étant orientées sensiblement verticalement, les axes d'articulation (14, 15, 24, 25) des bras (4, 5) étant formés au niveau de bords verticaux desdites plaques.

5. Agencement d'une porte coulissante selon l'une quelconque des revendications 1 à 4 **caractérisé en ce que** le bras de liaison (6) est constitué d'une plaque orientée de manière sensiblement verticale et dont les bords verticaux comportent les axes d'articulation (24, 7) du bras de liaison (6).

6. Agencement d'une porte coulissante selon l'une quelconque des revendications 1 à 5 **caractérisé en ce que** l'axe d'articulation (24) du premier bras (4) sur le bras de liaison (6) est situé entre d'une part l'axe d'articulation (25) du second bras (5) sur le bras (6) de liaison et, d'autre part, l'axe d'articulation (7) du bras de liaison (6) sur la porte (1).

7. Agencement d'une porte coulissante selon l'une quelconque des revendications 1 à 6 **caractérisé en ce qu'**il comporte des moyens (8, 18;5A, 5B) de compensation, disposés au niveau du second bras (5) et/ou du bras de liaison (6), et autorisant un faible débattement du second bras (5) par rapport au bras de liaison (6).

8. Agencement d'une porte coulissante selon la revendication 7 **caractérisé en ce que** les moyens de compensation sont constitués d'une glissière (8) solidaire du bras de liaison (6), l'axe d'articulation (25) du second bras (5) sur le bras de liaison (6) étant mobile dans une fente (18) formée dans la glissière (8).

9. Agencement d'une porte coulissante selon la revendication 7 **caractérisé en ce que** le second bras est constitué d'un vérin (5A, 5B) formant les moyens de compensation.

10. Agencement d'une porte coulissante selon l'une quelconque des revendications 1 à 9 **caractérisé en ce que** les mouvements d'ouverture et de fermeture de la porte (1) sont réalisés par un actionneur entraînant en rotation le premier (4) et/ou le second (5) bras autour de leur axes d'articulation (14, 15) respectifs sur le véhicule.

11. Agencement d'une porte coulissante selon l'une quelconque des revendications 1 à 10 **caractérisé en ce que** le rail de guidage (2) est situé dans la partie basse de l'ouverture de porte du véhicule, le chariot (3) étant situé dans la partie inférieure et avant de la porte (1), les moyens de d'articulation (4, 5, 6) étant situés au niveau la partie arrière de la porte (1) et du côté correspondant de l'ouverture de porte.

## Claims

1. Arrangement of a sliding door on a vehicle, the door (1) being connected to the vehicle by a guide assembly constituted by a carriage (3) and a guide rail (2) for the carriage (3), and also by articulation means, **characterised in that** the articulation means comprise a first (4) and a second (5) arm each articulated on the one hand to the vehicle and on the other hand to a third linking arm (6), the linking arm (6) being articulated to the door (1), the articulation means (4, 5, 6) being arranged so as to limit the clearance of the door (1) in a direction perpendicular to the axis of its sliding at the time of the opening and closing movements.

2. Arrangement of a sliding door according to Claim 1 **characterised in that** the axes of articulation (14, 15) on the vehicle of the first (4) and second (5) arms are different.

3. Arrangement of a sliding door according to Claim 1 or 2 **characterised in that** the axes of articulation (24, 25) of the first (4) and second (5) arms on the linking arm (6) are different and located substantially at a free end of the linking arm (6).

4. Arrangement of a sliding door according to any one of Claims 1 to 3 **characterised in that** the first (4) and second (5) arms each have the general shape of a plate folded substantially into an L-shape, the plates being oriented substantially vertically, the axes of articulation (14, 15, 24, 25) of the arms (4, 5) being formed at the vertical edges of said plates.

5. Arrangement of a sliding door according to any one of Claims 1 to 4 **characterised in that** the linking arm (6) is constituted by a plate oriented substantially vertically and the vertical edges of which comprise the axes of articulation (24, 7) of the linking arm (6).

6. Arrangement of a sliding door according to any one of Claims 1 to 5 **characterised in that** the axis of articulation (24) of the first arm (4) on the linking arm (6) is located between, on the one hand, the axis of articulation (25) of the second arm (5) on the linking arm (6) and, on the other hand, the axis of articulation (7) of the linking arm (6) on the door (1).

7. Arrangement of a sliding door according to any one of Claims 1 to 6 **characterised in that** it comprises compensation means (8, 18; 5A, 5B), arranged in the area of the second arm (5) and/or the linking arm (6), and permitting a small amount of clearance of the second arm (5) with respect to the linking arm (6).

8. Arrangement of a sliding door according to Claim 7 **characterised in that** the compensation means are constituted by a slide (8) integral with the linking arm (6), the axis of articulation (25) of the second arm (5) on the linking arm (6) being mobile within a slot (18) formed in the slide (8).

9. Arrangement of a sliding door according to Claim 7 **characterised in that** the second arm is constituted by a jack (5A, 5B) forming the compensation means.

10. Arrangement of a sliding door according to any one of Claims 1 to 9 **characterised in that** the opening and closing movements of the door (1) are performed by an actuator driving the first (4) and/or second (5) arm in rotation about their respective axes of articulation (14, 15) on the vehicle.

11. Arrangement of a sliding door according to any one of Claims 1 to 10 **characterised in that** the guide rail (2) is located in the lower part of the door opening of the vehicle, the carriage (3) being located in the lower, front part of the door (1), the articulation means (4, 5, 6) being located in the area of the rear part of the door (1) and on the corresponding side of the door opening.

## Patentansprüche

1. Anordnung einer Schiebetür an einem Fahrzeug, wobei die Tür (1) mit dem Fahrzeug über eine Führeinheit, bestehend aus einem Schlitten (3) und einer Schiene (2) zum Führen des Schlittens (3), sowie durch Gelenkmittel verbunden ist, **dadurch gekennzeichnet, dass** die Gelenkmittel einen ersten Arm (4) und einen zweiten Arm (5) aufweisen, die jeweils zum einen am Fahrzeug und zum anderen an einem dritten Verbindungsarm (6) angelenkt sind, wobei der Verbindungsarm (6) an der Tür (1) angelenkt ist und die Gelenkmittel (4, 5, 6) derart angeordnet sind, dass der Ausschlag der Tür (1) bei den Bewegungen des Öffnens und Schließens in einer Richtung begrenzt ist, die senkrecht zu ihrer Gleitachse verläuft.

2. Anordnung einer Schiebetür nach Anspruch 1, **dadurch gekennzeichnet, dass** die Achsen (14, 15) der Anlenkung des ersten Arms (4) und des zweiten Arms (5) am Fahrzeug verschieden sind.

3. Anordnung einer Schiebetür nach Anspruch 1 oder 2, **dadurch gekennzeichnet, dass** die Achsen (24, 25) der Anlenkung des ersten Arms (4) und des zweiten Arms (5) am Verbindungsarm (6) verschieden und im Wesentlichen an einem freien Ende des Verbindungsarms (6) angeordnet sind.

4. Anordnung einer Schiebetür nach einem der Ansprüche 1 bis 3, **dadurch gekennzeichnet, dass** der erste Arm (4) und der zweite Arm (5) jeweils die allgemeine Form einer Platte aufweisen, die im Wesentlichen zu einem L umgebogen ist, wobei die Platten im Wesentlichen vertikal ausgerichtet sind und die Gelenkachsen (14, 15, 24, 25) der Arme (4, 5) an den vertikalen Rändern der Platten verlaufen.

5. Anordnung einer Schiebetür nach einem der Ansprüche 1 bis 4, **dadurch gekennzeichnet, dass** der Verbindungsarm (6) aus einer im Wesentlichen vertikal ausgerichteten Platte besteht, an deren vertikalen Rändern sich die Gelenkachsen (24, 7) des Verbindungsarms (6) befinden.

6. Anordnung einer Schiebetür nach einem der Ansprüche 1 bis 5, **dadurch gekennzeichnet, dass** die Achse (24) der Anlenkung des ersten Arms (4) am Verbindungsarm (6) zwischen der Achse (25) der Anlenkung des zweiten Arms (5) am Verbindungsarm (6) und der Achse (7) der Anlenkung des Verbindungsarms (6) an der Tür (1) angeordnet ist.

7. Anordnung einer Schiebetür nach einem der Ansprüche 1 bis 6, **dadurch gekennzeichnet, dass** sie Ausgleichsmittel (8, 18; 5A, 5B) aufweist, die am zweiten Arm (5) und/oder am Verbindungsarm (6) angeordnet sind und einen geringen Ausschlag des zweiten Arms (5) gegenüber dem Verbindungsarm (6) zulassen.

8. Anordnung einer Schiebetür nach Anspruch 7, **dadurch gekennzeichnet, dass** die Ausgleichsmittel aus einer mit dem Verbindungsarm (6) fest verbundenen Schiene (8) bestehen, wobei die Achse (25) der Anlenkung des zweiten Arms (5) am Verbindungsarm (6) in einem Schlitz (18) in der Schiene (8) beweglich ist.

9. Anordnung einer Schiebetür nach Anspruch 7, **dadurch gekennzeichnet, dass** der zweite Arm aus einem Zylinder (5A, 5B) besteht, der die Ausgleichsmittel bildet.

10. Anordnung einer Schiebetür nach einem der Ansprüche 1 bis 9, **dadurch gekennzeichnet, dass** die Bewegungen des Öffnens und Schließens der Tür (1) von einem Betätigungsorgan ausgeführt werden, das den ersten Arm (4) und/oder den zweiten Arm (5) um ihre jeweiligen Achsen (14, 15) der Anlenkung am Fahrzeug dreht.

11. Anordnung einer Schiebetür nach einem der Ansprüche 1 bis 10, **dadurch gekennzeichnet, dass** die Führschiene (2) am unteren Abschnitt der Türöffnung des Fahrzeugs angeordnet ist, wobei der Schlitten (3) am unteren vorderen Abschnitt der Tür (1) und die Gelenkmittel (4, 5, 6) am hinteren Abschnitt der Tür (1) auf der entsprechenden Seite der Öffnung der Tür angeordnet sind.
